# EUROPEAN PATENT SPECIFICATION

(11) **EP 0 711 410 B1**
(45) Date of publication and mention of the grant of the patent: **26.03.1997**
(21) Application number: 93915807.7
(22) Date of filing: 06.07.1993
(51) Int. Cl.: G01N 25/36, H01H 1/00

(54) **CALORIMETRIC SENSOR**
KALORIMETRISCHER SENSOR
CAPTEUR CALORIMETRIQUE

(43) Date of publication of application: 15.05.1996
(73) Proprietor: International Business Machines Corporation, Armonk, N.Y. 10504 (US)
(72) Inventor: GERBER, Christoph, CH-8805 Richterswil (CH); GIMZEWSKI, James, Kazimierz, CH-8803 Rüschlikon (CH); REIHL, Bruno, CH-8832 Wilen (CH); SCHLITTLER, Räto, Rudolf, CH-8824 Schönenberg (CH)
(74) Representative: Klett, Peter Michael
(86) International application number: PCT/EP93/01742
(87) International publication number: WO 95/02180

(56) References cited:
- EP-A- 0 511 662
- WO-A-89/09477
- DE-C- 875 881
- FR-A- 2 287 698
- US-A- 2 745 721
- US-A- 2 881 274
- IEEE TRANSACTIONS ON ELECTRON DEVICES vol. ED25, no. 10 , October 1978 , NEW YORK US pages 1241 - 1250 K.E.PETERSEN 'dynamic micromechanics on silicon : techniques and devices' cited in the application

## Description

The invention relates to a calorimetric sensor. Specifically, it pertains to a calorimetric gas sensor. A calorimetric gas sensor measures gas concentrations as a function of the temperature change produced by the heat of an reaction on its surface covered by a chemical sensing layer, in particular by a catalyst.

### BACKGROUND OF THE INVENTION

The technical field of the invention are calorimetric sensors. The known calorimetric sensors are produced by combining a sensitive calorimeter, a catalytic surface, and, if necessary, a heater to maintain the catalyst at a desired operating temperature.

Most commonly, the calorimeter is a thermo-electric transducer converting the thermal signal into an electrical signal. It is commonly known to use a thermocouple or a resistance thermometer as such a transducer. The simplest known form of a catalytic gas sensor is a simple platinum coil. The platinum coil is able to act, both, as a heater and as a temperature sensor. Platinum also serves as an active catalyst for reactions like the hydrocarbon oxidation.

Also the platinum coil sensor might still be used in spot reading instruments, it is not well suited for use in continuous operation due to a degradation of the catalyst. Improvement have been made by using more active catalysts, such as porous platinum, porous rhodium, or paladium (oxide) finely dispersed in thorium dioxide (thoria), and the like. Microcalorimeters based on these materials are also known as pellistors. A detailed description of catalytic gas sensors can be found, for example, in GB-A-1501888. However, the known calorimetric gas sensor is used mostly as a quantitative device for the measurement of gases at high concentrations, e.g. as to detect an explosive gas mixture. The sensitivity of the known devices is limited to the range above 100 ppm. This is not enough to exploit these devices in fields which require a sensitivity for traces of a gas, as, for example, in toxicologic applications.

A higher sensitivity is achieved by a class of gas sensors known as metal-oxide gas sensors. Metal-oxide gas sensors are based on the electrical conductivity changes induced in a layer of metal oxide by gas adsorption on its surface. Mostly, inorganic materials such as oxides of tin and zinc are employed as sensing layers. Metal-oxide gas sensors are applied, for example, for monitoring the exhaust gases from internal combustion engines with a view to control the air/fuel ratio. As inorganic materials usually have to be operated at elevated temperatures, considerable efforts are known to exploit the properties of organic materials. These efforts are concentrated on phthalocyanine and porphyrin based materials containing different metal ions. It is an object of the invention to introduce a new calorimetric sensor. In particular, it is an object of the invention to enhance the sensitivity of the known sensors based on calorimetric principles. A further object of the invention is to develop a calorimetric gas sensor suitable for the trace analysis of gas mixtures. Yet another object of the invention is to supply a miniaturized calorimetric gas sensor designed for an integrated circuitry, especially in the form of arrays of such sensors.

### SUMMARY OF THE INVENTION

The new catalytic gas sensor comprises a flexible element with a least two layers of material having a different thermal expansion coefficient and one of said layers or another layer able to act as chemical sensing layer, and means to detect the deflection of said flexible element.

The new sensor is based on what is commonly known as bimetal or thermobimetal effect. Bimetal switches have found a wide spread application in many devices, though being more and more replaced by electronic devices. In principle, a bimetallic temperature sensor is made of two tightly bonded layers of materials differing in their respective thermal expansion coefficient. These materials do not necessarily have to be metals. Therefore, the term "bimorph" is used as a less known but more precise synonym for "bimetallic". In case of a temperature change, both material elongate by different amounts, thus, introducing a bending or deflection of the flexible element from its original shape or position. In a first approximation, the bending radius of a thin bimorph strip is given by R = I/(α₁ - α₂)ΔT with I being the length of the strip, α₁, α₂ being the respective thermal expansion coefficients of the two bonded materials, and ΔT being the temperature difference. The known bimetallic devices, however, have sizes within the centimeter range, making them unacceptable for any use besides a crude temperature measurement. No bimetallic device is known which is combined with a chemical sensing layer and able to detect a chemical reaction involving said layer.

Though the invention makes use of the bimetallic effect. the dimensions of the new device are reduced to below one millimeter, reducing simultaneously the thermal capacity and the heat flow out of the device and, thus, enhancing the sensitivity of the device.

As for the materials, themselves, there are, in principle, no constraints upon the shape of the flexible element used in the new device. However, to enhance sensitivity, it has preferably a beamlike shape or is formed like a triangle with a punched central portion, in which the length surmounts the width by approximately a factor of 10. Calculations based on the simple case of a beam as flexible element show that an optimum sensitivity can be achieved by using long thin beams. However, thermally induced noise makes it desirable to utilize a flexible element with a spring constant of above 1 N m⁻¹ and a high resonance frequency. These conditions, together with a demand for a fast response time, enable a skilled person to optimize the new sensor in accordance with any imposed requirement.

A further enhancement of the sensitivity of the flexible element can be achieved by using more refined designs, e.g. by separating the two layers with different expansion coefficients leaving only at a few points bridges as a connection. However, these flexible elements have to be prepared with higher accuracy than the simple elements described above. As the silicon technology is the most developed technology for producing miniaturized devices, it is of advantage to use materials based on silicon for the preparation of the bimorph flexible elements. For examples Petersen describes in the IEEE Transactions on Electron Devices, Vol.ED-25, No.10, October 1978,pp. 1241-1250, the preparation of metal coated cantilevers on silicon wafers. From other sources, the preparation of beams of SiN by anisotropic chemical etching is known. Other feasible methods for preparing the desired flexible element are focussed beam techniques. reactive ion etching, and x-ray or synchrotron lithography in combination with galvano- or electroforming.

The second layer has advantageously a thermal expansion coefficient α₂ which differs substantially from the thermal expansion coefficient α₁ of the main material of the flexible element. Suitable materials are, for example, metals like Al and Au, which are easily applicable onto the surface of Si and SiN.

To make the bimorph or "bimetallic" element a tool for monitoring even small amounts of gases, the means to detect the deflection of this element has to be very sensitive. Several accurate methods to detect the bending of a cantilever are known from the field of atomic force microscopy (AFM). The AFM is known as a device to examine the roughness of a surface. For that purpose, a cantilever is applied with a microscopic tip and scanned across the surface to be examined. It is found that the methods applied in AFM to detect the deflection of the cantilever can be advantageously employed in the new device. With the help of these methods. lever deflections of the order of less than 1 nm can be easily detected. In addition. motions of the lever ranging from 0.001 nm up to 100 µm can be monitored, giving the new sensor a possible dynamic range of 10⁹. It is well within the scope of an averaged skilled person to choose one of the available methods known in the field of atomic force microscopy as means to detect the deflection of the flexible element.

One group of these detecting methods is based on coupling the cantilever to another distance sensitive microscope. A combination of the cantilever with a scanning tunneling microscope is described, for example, in the patent US-A-4724318. Another approach using an evanescent wave coupling sensor, also known as scanning near-field optical microscope (SNOM) or scanning tunneling optical microscope (STOM), is described by Diaspro and Aguilar in: Ultramicroscopy 42-44 (1992), pp. 1668-1670.

Another group of detecting methods is based on the well known piezoelectric or piezoresistive effect. An example is described in: M. Tortonese et al., Appl. Phys. Lett. 62(8), 1993, pp.834-836. These methods provide detection schemes in which the deflection detector is integrated in the cantilever.

Yet another feasible way of detecting the displacement of the cantilever relies on capacitance sensing and is known, for example, from Joyce et al., Rev. Sci. Instr. 62(1991), p. 710, and Göddenhenrich et al., J. Vac. Sci. Technol. A8(1990), p. 383.

It is also possible to use the changes in the resonance frequencies of the flexible element to measure its bending. The fundamentals of this technique are known and described for example in the patent US-A-3413573.

The displacement of the flexible element can also be measured by applying optical methods, such as beam deflection or interferometry. The beam deflection method makes use of the length of the lever. Usually, a light beam, preferably produced by a laser diode or guided through an optical fiber, is directed onto the lever. A small deflection of the lever causes a reasonable change in the reflecting angle and, therefore, results in a deflection of the reflected light beam that is measured with bicell or other suitable photo detectors. The beam deflection method is simple and reliable. Interferometric methods are described, for example, by Martin et al., J. Appl. Phys. 61(1987), p.4723, by Sarid et al., Opt.Lett. 12(1988), p.1057, and by Oshio et al., Ultramicroscopy 42-44(1992), pp.310-314.

Though it is possible to use one of the two "bimetallic" layers simultaneously as a chemical sensing layer, in most cases a third, distinct layer acting as a sensing element is required. This chemical sensing layer does not necessarily has to be a catalyst, even though a catalyst as chemical sensing layer forms a preferred embodiment of the invention. However, the high sensitivity of the new sensor makes it possible to exploit even the heat transfer occurring during ad- or absorption of molecules at the surface of the sensing layer. Therefore , a layer can be chosen which enables a selective ad- or absorption of the molecules to be detected. Thus, the term "chemical sensing layer" is used to specify the broader scope of the new sensor.

An ideal catalyst is defined as a substance that increases the rate at which a chemical reaction approaches equilibrium, without itself becoming permanently affected by the reaction. The catalyst achieves this enhancement by providing an alternative reaction path. involving different activated complexes, with a lower activation energy than the uncatalysed reaction mechanism. A wide range of catalysts for many different chemical reactions is known. For measurements using the catalytic oxidation of hydrogen, carbonmonoxide, hydrocarbons and other combustible gases, for example, the transition metals Pt, Pd, Rh, Ir, or their oxides, or a mixture of those materials are preferably applied. It is possible to provide a surface of the cantilever with a thin catalyst layer by using known deposition techniques, such as sputtering, epitaxial methods or electrochemical deposition. The surface of a deposited film can be further enlarged or roughened by etching with a suitable chemical agent.

As said above. another embodiment of the chemical sensing layer is a material which enables a chemisorption, i.e. the formation of chemical bonds between the (surface) molecules of said layer and those molecular species to be detected. The enthalpy oi a chemisorptive process is known to range from approximately 40 kJ/mol to 400 kJ/mol. An energy transfer in this amount can readily be detected by the new sensor. Suitable materials are, for example, Ni, Fe, Ag, and Pt. The sensitivity of the new device allows in principle also the detection of adsorption, the energy of which is ranging from 0.3 kJ/mol to 3 kJ/mol, i.e. less than a tenth of the energy found at catalytic reactions or chemisorption.

By being able to detect chemisorption and adsorption, the new sensor also forms a valuable device to monitor biochemical processes: The chemical sensing layer is this case is advantageously a Langmuir-Blodgett (LB) film applied to the bimorph cantilever by known methods. Using the defined hydrophilic or hydrophobic surface of the LB film and the affinity between certain molecules, such as proteins and enzymes. it is, thus, possible to tailor a highly specific sensor suitable not only for gas analysis but also for medical test methods, e.g. immunoassay systems. The vast state of art concerning LB films is, for example, referred to in: G.G. Roberts (ed.), Langmuir-Blodgett Films, Plenum, New York, 1990. A method for applying a LB film to the surface of a semiconducting surface is detailed by S. Lee et al., Sensors and Actuators B, 12 (1993), pp.153-154.

By changing the temperature, a chemisorption can be reversed. e.g. the chemisorption of hydrogen on nickel or platinum. Many catalytic reactions equally require an initial temperature. The difference in the initial temperature allows to inhibit and suppress undesired reactions. These temperature dependent reactions can be effectively exploited when using the sensor as an analyzing tool. In general, it is more convenient to provide the necessary temperature by heating the chemical sensing layer than by heating the reactants. themselves. As to this reason, the sensor preferably comprises a heating device for the chemical sensing layer. The sensing layer can be heated by a juxtaposed electrical heater, i.e. a thermoelement, or by using electromagnetic radiation.

In a preferred embodiment of the invention, the chemical sensing layer is heated by the same light emitting device which is employed for measuring the deflection of the flexible element by using the above described beam deflection method.

The sensitivity of the new device is enhanced by employing a pair of flexible elements only one of which is covered by a chemical sensing layer. This embodiment of the invention has intrinsic reference or calibration properties, as both levers bend by the same amount for temperature changes not related to a chemical reaction resulting in a zero difference signal. The desired reaction, however, only effects the bending of the covered lever and is, thus, detected with an enhanced accuracy.

By combining levers coated with different chemical sensing layers and/or levers held at different temperatures. it is possible to manufacture an artificial nose, able to identify and analyze different gas mixtures. Catalysts specifically sensitized to a single molecule for analyzing purposes readily simplifies the identification of a substance. However, in cases where no such catalyst is available. the levers can be held at different temperatures to obtain the reaction activation energy by evaluating the reaction rate, in particular, if a simple Arrhenius relationship holds between the reaction rate and the temperature. Interferences between several substances may be eliminated by applying multicomponents analysis techniques known per se.

In the following, the model (catalytic) reaction $\text{A(g) + B(g) + C(s) → D(g) + C(s),}$is taken as an example to illustrate the operating principles of the sensor according to the invention. The reaction describes the formation of a gaseous substance D from the two gaseous reactants A and B accelerated by the solid catalyst C left unchanged.

Associated with the reaction is an enthalpy of formation ΔH, giving the amount of heat released to (exothermic reaction) or absorbed from (endothermic reaction) the surrounding per mass unit. In the following, the reaction is assumed to be exothermic. i.e. ΔH < 0. Thus, the formation rate, i.e. the reaction velocity, is corresponding to a certain amount of heat produced per time unit. Except for losses to the surrounding, the heat causes a temperature rise ΔT in the cantilever coaled with the catalyst until the formation of heat is balanced by the losses. The change in temperature causes the lever to bend, as it is made of materials with different thermal expansion coefficient. Thus, ΔT corresponds to a deflection of the flexible element from its previous position, which is measured by the means described above. An equal behaviour applies if the reaction is endothermic. In this case, the cooling induced by the reaction causes the bimorph lever to bend.

By measuring the deflection as such. the sensor presents a highly sensitive detector for the appearance of a certain substance. By using an appropriate calibration to determine the relation between the reaction velocity and the amount of deflection, the sensor is useful for quantitative measurements, too. Due to its sensitivity and small dimensions the sensor can provide a valuable tool for controlling chemical processes. In particular, it can be use to detect toxic or combustive gases in air, especially to monitor the exhaust gases of combustion engines and other environmental hazards. Covered by an appropriate chemical sensing layer, the new sensor is also applicable in analysing biochemical reactions and as a tool for performing medical tests.

### DESCRIPTION OF THE DRAWINGS

The invention is described in detail below with reference to the following drawings:
- **FIG. 1**: schematically shows an embodiment of the new sensor and an apparatus for testing it.
- **FIGs. 2A,B,C**: show a component of the new sensor in different embodiments.
- **FIG. 3**: shows a plot of the deflection of a sensor according to the invention versus the power of laser radiation.
- **Fig. 4**: illustrates the behaviour of the flexible element under operating conditions.
- **Fig. 5**: shows an embodiment of the invention having intrinsic reference properties.
- **Fig. 6**: shows an array of sensors as a one chip device.

### EXAMPLES

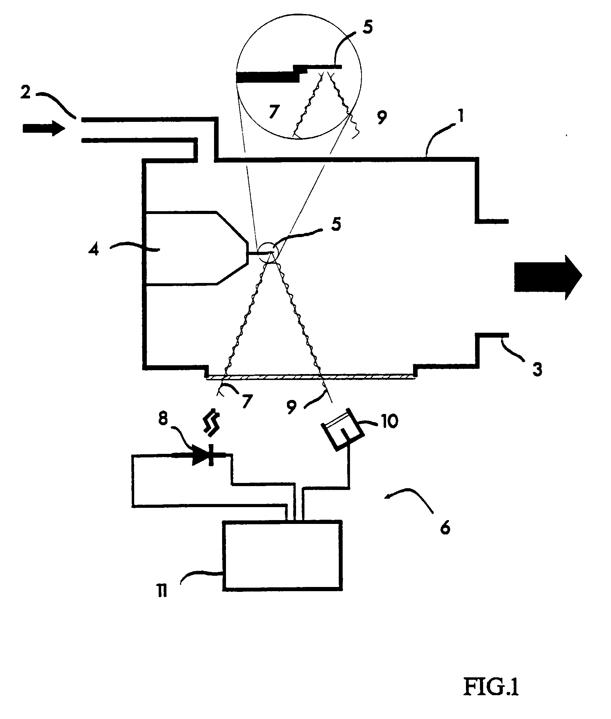

An embodiment of the new sensor according to the invention is tested by using a conventional atomic force microscope (AFM). FIG. 1 shows a vacuum chamber **1**, an inlet **2** for test gas mixtures and an outlet **3** leading to the pumping system (not shown). The chamber **1**, further, comprises a holder 4 to mount the flexible element, the cantilever **5** which serves as such flexible element, and a beam deflection system **6** for determining the deflection of the cantilever **5**. A light beam **7** is generated by a laser diode **8**. In operation, the beam **7** is reflected from the cantilever **5** and the reflected beam **9** is surveilled by a two sectors of a quadrant detector **10**. The quadrant detector is operated in the (A-B)/(A+B) mode to normalize for fluctuations in the laser power. The beam deflection system comprises means **11** to determine the deflection of the cantilever **5** using the signals received the detector **10**.

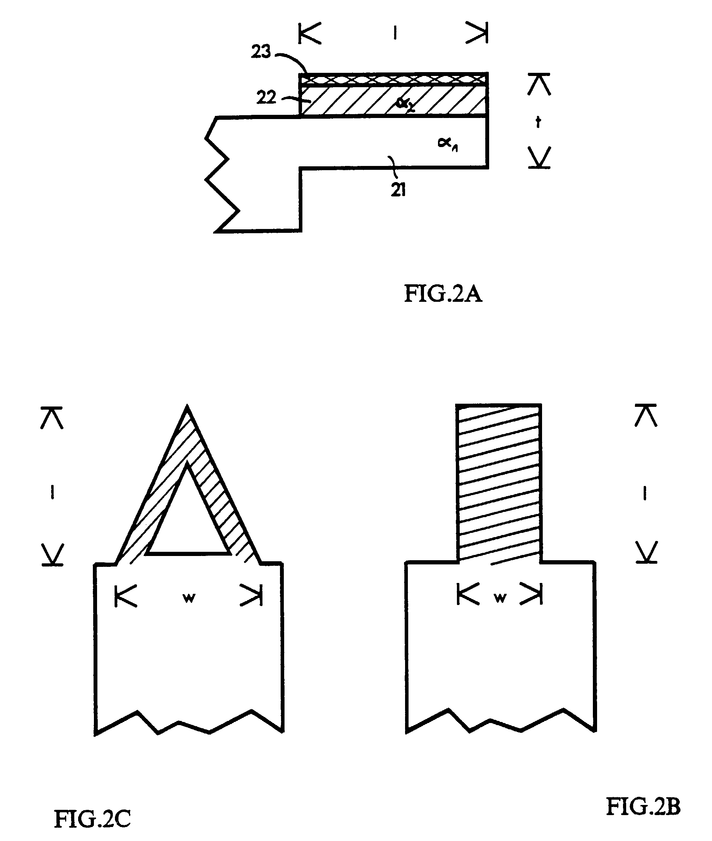

To demonstrate the operating principle of the new sensor as a calorimeter, a beam-shaped bimorph cantilever as shown in FIGs. 2A.B is employed. The cantilever's base material **21** is Silicon with a thickness of 1.5 µm coated by a 0.4 µm thick layer **22** of Al using a vacuum evaporation technique. Both layers **21, 22** have thermal expansion coefficients α₁,α₂ which differ significantly as having the values 3 × 10⁻⁶°C⁻¹ for Si and 25 × 10⁻⁶°C⁻¹ for Al. The layers **21, 22**, thus, form the desired bimorph or "bimetallic" junction. Using again vacuum evaporation, a 40 nm thick Pt layer **23** is deposited on top of the AL layer to act as catalyst. The overall dimensions of the applied cantilever are: I = 400 µm, w = 35 µm, and t = 1.94 µm.

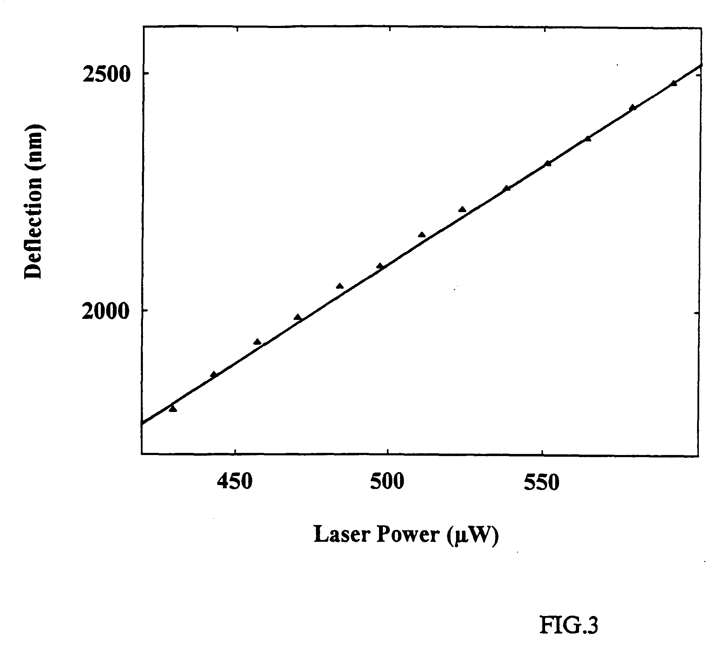

The linearity and the response time of the sensor are tested by varying the output power the laser diode **8** from 400 µW to 600 µW. As shown by FIG. 3, the deflection of the bimorph cantilever relates linear to the heat transfer induced by radiation of the laser diode the power of which ranges from 400 µW to 600 µW. The data further show that an effective heating of the cantilever can be achieved by using the laser radiation of the deflection beam system. Thus, it is possible to heat the chemical sensing layer **23** above the ambient temperature.

By measuring the response of the cantilever **5** to a laser pulse of 300 µW, a response time of approximately 1 ms is determined for a device according to the example.

In another example. the new sensor is applied to monitor a chemical reaction. A triangularly shaped cantilever **5** is used as illustrated by FIGs. 2A,C. The cantilever's base material **21** is silicon nitride (SiN), coated by a 0.2 µm thick layer **22** of Al using vacuum evaporation. Using the same technique, again, a layer **23** of Pt is deposited onto the alumina as catalyst. The layer **23** has a thickness of 20 nm. As in the previous example, fine intermediate layers formed by the oxidation of the freshly etched or deposited surface are not taken into account as separate layers. The dimensions (see FIGs. 2A,C) of the cantilever are: I= 200 µm, w= 20 µm, and t= 2 µm with a force constant of approximately 0.1 Nm⁻¹.

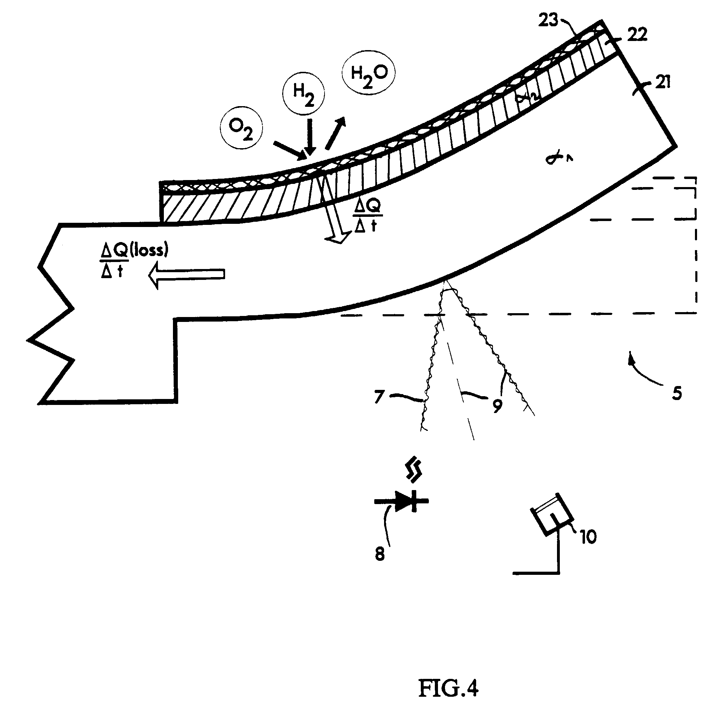

Refering to FIGs. 1 and 4, the device is tested by using the reaction: ${\text{H}}_{\text{2}} {\text{+ 1/2 O}}_{\text{2}} {\text{→ H}}_{\text{2}} \text{O}$with a reaction enthalpy of 242 kJ/mol, catalyzed by the Pt layer **23**. First, the vacuum chamber **1** is pumped to a pressure of 10⁻⁵ mbar to remove unwanted gaseous residues. Then, the chamber is filled with a mixture of H₂ and O₂ in the correct stoichiometric ratio (2:1) up to a pressure of 2 × 10⁻² mbar.

Due to the heat production ΔQ/Δt of the reaction at the catalytic surface **23**, the temperature of the cantilever **5** rises until the produced heat is balanced by the heat losses ΔQ(Loss)/Δt. The temperature rise corresponds to a bending of the cantilever as depicted in FIG. 4. After bending, the laser beam **9** is reflected in a slightly different angle compared to the unbended case. The difference is measured by the detector **10**. Under the described conditions, the cantilever was deflected by 150 nm, thus, giving a theoretical detection limit for hydrogen of 10⁻⁷ mbar, as a deflection of 0.1 nm can still be detected under optimum conditions.

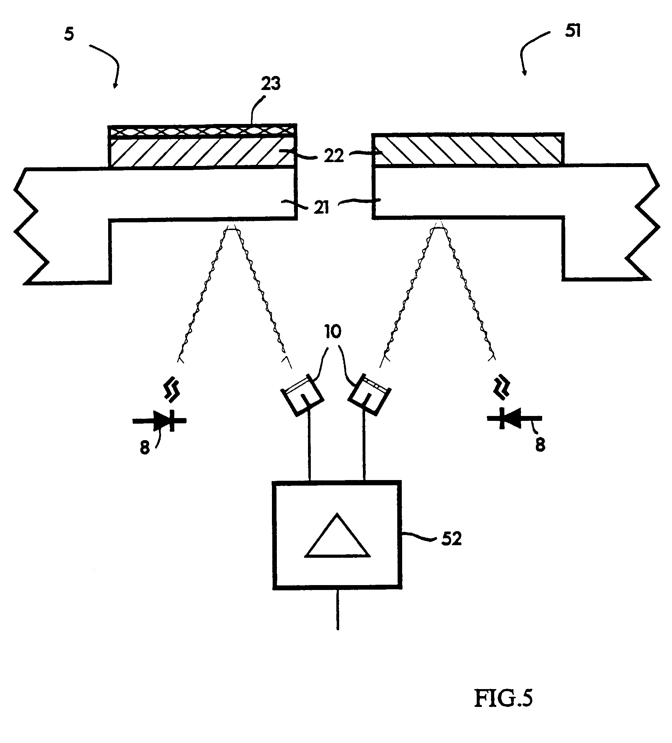

It is further possible to enhance the sensitivity of the sensor by eliminating some of the background noise by using a device which compensates for temperature shifts not caused by the catalytic reaction, itself. An example of such a device with an intrinsic calibration is shown in FIG. 5. It comprises a second lever **51** almost identical to the first lever 5 lacking, however, a chemical sensitive layer **23**. The deflection of each lever is measured with the same means **6** as described above (see FIG. 1), additionally comprising means **52** to determine the difference between the deflection of both lever **5, 51**. By measuring the deflections of both levers and evaluating their difference, the background shifts due to changes in temperature and other effects are diminished.

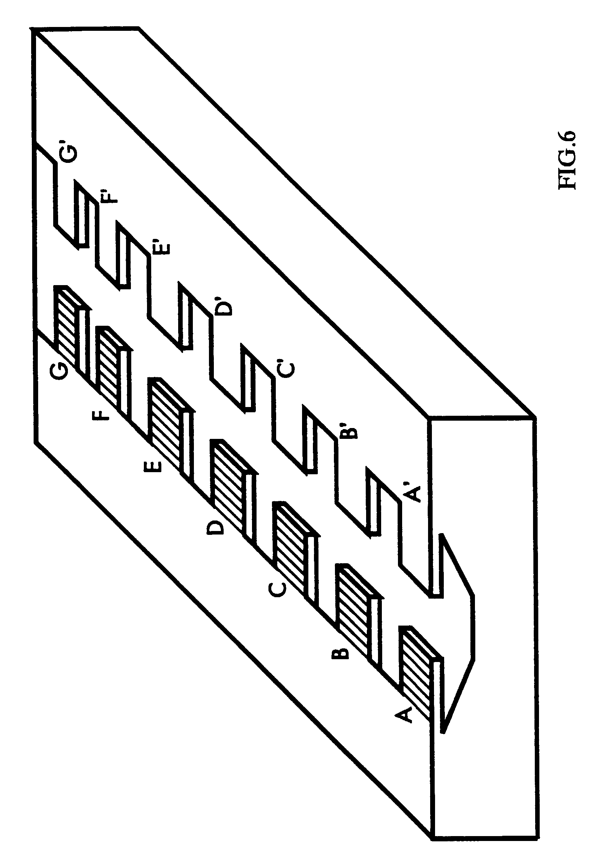

By coupling several sensors (with intrinsic calibration), each sensitized to a different species A, B, C, D, E, F, and G, as illustrated by FIG. 6, a multi-component analyzer is realized. Letters A', B', ..., and G' denote the uncoated reference levers used to eliminate the background noise. Though a careful choice of the catalysts and temperature conditions has to be made by a skilled person, the fundamental principles of the device remains unchanged: An analysis of the deflection of each lever or pair of lever gives the amount of the component for which the lever has been sensitized. Interferences occurring due to a partial sensitivity of a catalyst for more than one species can be filtered out by an appropriate mathematical method.

As all components (levers, laser diodes, photo detectors, etc.) are producible on the semiconducting base material (Si), it is readily feasible to manufacture also large arrays of the sensor on a single-chip basis.

## Claims

1. A calorimetric sensor, especially a calorimetric gas sensor, comprising
a flexible element **(5)** with at least two layers **(21, 22)** of materials with different thermal expansion coefficients, one of which is a chemical sensing layer **(23)** deposited as a film onto a single one of said layers, and means for determining a deflection of said flexible element **(5)**.

2. A sensor in accordance with claim 1, comprising
at least two layers **(21, 22)** of materials with different thermal expansion coefficients and at least one additional chemical sensing layer **(23)** deposited as a film onto a single one of said layers.

3. A sensor in accordance with claim 1, wherein
the means **(6)** for determining the deflection of the flexible element **(5)** is chosen from a group comprising means for measuring the tunnel current between the flexible element **(5)** and a probing tip, means for measuring the intensity of an evanescent electro-magnetic wave guided through the flexible element **(5)**, means for determining a piezo-electric/resistive change of the flexible element **(5)** while bending. means for measuring the capacity between the flexible element **(5)** and another surface, interferometric means, and beam deflection means.

4. A sensor in accordance with claim 1, comprising
means for heating the chemical sensing layer **(23)**.

5. A sensor in accordance with claim 4, wherein
the heating means is a resistance heater, or a thermoelement, or an emitter **(8)** of intensive electromagnetic radiation.

6. A sensor in accordance with claim 1, wherein
the chemical sensing layer **(23)** is a catalytic layer.

7. A sensor in accordance with claim 1, wherein
the chemical sensing layer **(23)** is a catalytic layer comprising a transition metal, or an oxide of said metal, or a combination of those materials.

8. A sensor in accordance with claim 1, wherein
the chemical sensing layer **(23)** comprises an organic material, preferably a Langmuir-Blodgett film of said organic material.

9. A sensor in accordance with claim 1, comprising
means for compensating a background deflection of the flexible element **(5)**.

10. A sensor in accordance with claim 9, wherein
the compensating means comprises a pair of flexible elements **(5, 51)** made of identical materials, only one having the chemical sensing layer **(23)**, means **(8, 10)** for determining the deflections of both flexible elements **(5, 51)** simultaneously, and further means **(52)** for determining the difference between said deflections.

11. An array, comprising at least two sensors in accordance with claim 1, wherein each sensor has a different chemical sensing layer **(23)**.

12. An array, comprising at least two sensors in accordance with claim 4, wherein the chemical sensing layers **(23)** of said two sensors have different temperatures under operating conditions.

## Patentansprüche

1. Ein kalorimetrischer Sensor, speziell ein kalorimetrischer Gassensor, bestehend aus einem biegsamen Element 5 mit mindestens zwei Schichten 21, 22 aus Materialien mit unterschiedlichen Wärmeausdehnungskoeffizienten, wobei eines dieser Materialien eine chemische Sensorschicht 23 ist, die als Film auf eine einzige der Schichten aufgebracht worden ist, sowie aus einem Mittel zur Ermittlung der Durchbiegung des biegsamen Elementes 5.

2. Ein Sensor gemäß Anspruch 1, bestehend aus mindestens zwei Schichten 21, 22 aus Materialien mit unterschiedlichen Wärmeausdehnungskoeffizienten und mindestens einer zusätzlichen chemischen Sensorschicht 23, die als Film auf eine der Schichten aufgebracht worden ist.

3. Ein Sensor gemäß Anspruch 1, bei dem das Mittel 6 zur Ermittlung der Durchbiegung des biegsamen Elements 5 aus einer Gruppe von Mitteln zur Messung des Tunnelstroms zwischen dem biegsamen Element 5 und einer Fühlerspitze, Mitteln zur Mes-sung der Stärke einer durch das flexible Element 5 geführten gedämpften elektromagnetischen Welle, Mitteln zur Bestimmung einer piezoelektrischen Änderung oder einer Änderung des piezoelektrischen Widerstands des biegsamen Elements 5 bei der Durchbiegung, Mitteln zur Messung der Kapazität zwischen dem biegsamen Element 5 und einer anderen Oberfläche, interferometrischen Mitteln und Strahlablenkungsmitteln ausgewählt worden ist.

4. Ein Sensor gemäß Anspruch 1, der Mittel zur Erwärmung der chemischen Sensorschicht 23 enthält.

5. Ein Sensor gemäß Anspruch 4, bei dem das Mittel zur Erwärmung eine Widerstandsheizung, ein Thermoelement oder eine Quelle 8 intensiver elektromagnetischer Strahlung ist.

6. Ein Sensor gemäß Anspruch 1, bei dem die chemische Sensorschicht 23 eine Katalysatorschicht ist.

7. Ein Sensor gemäß Anspruch 1, bei dem die chemische Sensorschicht 23 eine Katalysatorschicht aus einem Übergangsmetall oder einem Übergangsmetalloxid oder eine Kombination beider ist.

8. Ein Sensor gemäß Anspruch 1, bei dem die chemische Sensorschicht 23 aus einem organischen Material, vorzugsweise einem Langmuir-Biodgett-Film aus diesem organischen Material, besteht.

9. Ein Sensor gemäß Anspruch 1, der Mittel zur Kompensation einer Grunddurchbiegung des biegsamen Elementes 5 enthält.

10. Ein Sensor gemäß Anspruch 9, bei dem das Kompensationsmittel aus einem Paar biegsamer Elemente 5, 51 aus identischem Material, von denen nur eines mit der chemischen Sensorschicht 23 versehen ist, Mitteln 8, 10 zur gleichzeitigen Bestimmung der Durchbiegung beider biegsamen Elemente 5, 51 und weiteren Mitteln 52 zur Ermittlung der Differenz beider Durchbiegungen besteht.

11. Eine Anordnung von mindestens zwei Sensoren gemäß Anspruch 1, bei der jeder Sensor eine andere chemische Sensorschicht 23 besitzt.

12. Eine Anordnung von mindestens zwei Sensoren gemäß Anspruch 4, bei der die chemischen Sensorschichten 23 der beiden Sensoren unter Betriebsbedingungen unterschiedliche Temperaturen haben.

## Revendications

1. Un capteur calorimétrique, spécialement un capteur calorimétrique pour gaz, comprenant :
un élément flexible (5) ayant au moins deux couches (21, 22) en des matériaux ayant des coefficients de dilatation thermique différents, dont une est une couche à sensibilité chimique (23) déposée sous forme de film sur l'une desdites couches, et des moyens pour déterminer la déformation dudit élément flexible (5).

2. Un capteur selon la revendication 1, comprenant :
au moins deux couches (21, 22) en des matériaux ayant des coefficients de dilatation thermique différents et au moins une couche à sensibilité chimique (23) supplémentaire déposée sous forme film sur l'un desdites couches.

3. Un capteur selon la revendication 1, dans lequel :
le moyen (6) de détermination de la déformation de l'élément flexible (5) est choisi dans un groupe comprenant des moyens de mesure du courant d'effet tunnel entre l'élément flexible et un embout de sonde, un moyen de mesure de l'intensité d'une onde électromagnétique évanescente, guidée à travers l'élément flexible (5), un moyen de détermination d'une modification de nature piézoélectrique/résistive de l'élément flexible (5) pendant sa flexion, un moyen de mesure de la capacité entre l'élément flexible (5) et une autre surface, un moyen interférométrique et un moyen de déviation de faisceaux.

4. Un capteur selon la revendication 1, comprenant :
un moyen de chauffage de la couche à sensibilité chimique (23).

5. Un capteur selon la revendication 4, dans lequel :
le moyen de chauffage est un élément chauffant à résistance, ou bien un thermoélément, ou un émetteur (8) de réalignement électromagnétique intense.

6. Un capteur selon la revendication 1, dans lequel :
la couche à sensibilité chimique (23) est une couche catalytique.

7. Un capteur selon la revendication 1, dans lequel :
la couche à sensibilité chimique (23) est une couche catalytique constituée d'un métal de transition ou d'un oxyde dudit métal ou d'une combinaison de ces matériaux.

8. Un capteur selon la revendication 1, dans lequel :
la couche à sensibilité chimique (23) est une couche catalytique est constituée d'un matériau organique, de préférence un film Langmuir-Blodgett dudit matériau organique.

9. Un capteur selon la revendication 1, comprenant:
un moyen pour compenser une déformation d'arrière-plan de l'élément flexible (5).

10. Un capteur selon la revendication 9, dans lequel:
le moyen compensateur comprend une paire d'éléments flexibles (5, 51) constitués de matériaux identiques, dont un seul présente la couche à sensibilité chimique (23), des moyens (8, 10) de détermination simultanée des déformations des deux éléments flexibles (5, 51), et des moyens supplémentaires (52) destinés à déterminer la différence entre lesdites déformations.

11. Une matrice, comprenant au moins deux capteurs selon la revendication 1, dans laquelle chaque capteur a une couche à sensibilité thermique (23) différente.

12. Une matrice, comprenant au moins deux capteurs selon la revendication 4, dans laquelle les couches à sensibilité thermique (23) desdits deux capteurs ont des températures différentes lorsqu'elles se trouvent dans des conditions de fonctionnement.
